# EUROPEAN PATENT SPECIFICATION

(11) **EP 2 632 137 B1**
(45) Date of publication and mention of the grant of the patent: **20.04.2016**
(21) Application number: 13000648.9
(22) Date of filing: 07.02.2013
(51) Int. Cl.: H04M 1/725, G06Q 10/06, G06Q 10/10

(54) **Method for using an electronic calendar and a handheld mobile electronic device using the same**
Verfahren zur Verwendung eines elektronischen Kalenders, und eine mobile tragbare elektronische Vorrichtung damit
Procédé pour utiliser un calendrier électronique et dispositif électronique mobile portable l'utilisant

(30) Priority: 24.02.2012 US 201261602609 P; 24.01.2013 US 201313748606
(43) Date of publication of application: 28.08.2013
(73) Proprietor: HTC Corporation, Taoyuan City 330 (TW)
(72) Inventor: Lin, Yi-Shan, 330 Taoyuan City, Taoyuan County (TW)
(74) Representative: Schmidbauer, Andreas Konrad

(56) References cited:
- EP-A1- 2 091 010
- US-A1- 2008 098 313
- US-A1- 2009 313 299

## Description

### BACKGROUND

### TECHNICAL FIELD

The present disclosure generally relates to a method of using an electronic calendar and a handheld mobile electronic device using the same.

### RELATED ART

An handheld mobile electronic device such as a mobile phone or PDA is often equipped with an electronic calendar application or widget which may very well be an indispensable tool in the modem life. Generally, a user may plan events on certain dates of a month or a year using the calendar as well as activities within a single date. In other words, a user may customize one's own calendar by entering information to annotate a certain date or a certain time of the day. As the result of the recent development of an electronic calendar in a mobile phone, the electronic calendar has replaced the function of a traditional calendar and a traditional planner as a business person no longer has to carry one's planner around in a suitcase.

Also recent technological advancements have brought about social networks which not only bring people closer together but also enable people to stay connected to other people's lives. Consequently, a person not only has one's own calendar but may also be expected to keep track of other people's calendars when they are shared willingly by others. Currently, various social networks have implemented functions such as events planning in certain time of a day or a calendar function which records a person's birthday or various special events.

A conventional calendar application for mobile phone may synchronize with various social networks to obtain personal information such as people's profiles, photographs, or data uploaded to the social networks. However, calendar functions between various platforms such as web based social networks, messengers, or mobile phones are not yet fully synchronized. For instance, when a birthday reminder is triggered by a calendar application in accordance with the profile data obtained from the social networks, a user still has to additionally launch the social network application if he/she wants to post a birthday greeting on that friend's web page provided by the social network.

US 2008/098313 A1 discloses a system and method for facilitating the configuration and management of events within a social networking system. The system enables members of similar or different geographic region and/or like interests, hobbies, social status, relationship status, family status, etc. to interact with the system to view activities, register to participate in activities, and schedule activities. A personal workspace, accessible through a variety of devices (e.g., kiosks, web clients, wireless devices, and set-top boxes) enables network members to view a personal calendar, scheduled events and activities, invitations, localized news, and the like. The personal workspace further facilitates registration to participate in scheduled activities. A scheduling interface enables network users to configure and schedule activities through selection and/or entry of an activity details. The system further interacts with other systems to determine facility availability, facility costs, payment processing, perform background checks, synchronize calendars and contact lists, and the like.

US 2009/313299 A1 discloses that in order to help system users organize the user data and communications, a service provider system organizes the user data according to a specific system data architecture using W4 technology to facilitate organization of user communications, content, and data. The system provides a data structure that organizes data using the human metaphor and provides a user interface to access and manipulate the data using a human metaphor.

EP 2 091 010 A1 discloses a method of controlling reminders for an electronic calendar event record. The method includes: generating a reminder notification at a first electronic device, the reminder notification associated with the calendar event record, providing an option at the first electronic device for taking a first action at the first electronic device and taking a second action at a second electronic device, the first action differing from the second action, generating an update command at the first electronic device for taking the second action at the second electronic device in response to receipt of selection of the option at the first electronic device, and sending the update command from the first electronic device for the second electronic device.

### SUMMARY OF THE DISCLOSURE

This present disclosure provides a method of a calendar application/widget interaction among users and with online services while showing a reminder triggered by the information obtained from the online services.

The present disclosure is also directed to a handheld mobile electronic device which implements functions of a calendar application/widget interaction among users and with online services while showing a reminder triggered by the information obtained from the online services.

According to the present invention, a method is provided as set forth in claim 1. The method performs the steps of first synchronizing the electronic calendar with an external data storage to generate a synchronized data, generating automatically an event according to the first synchronized data, displaying the event, inputting a user response based on the event, transmitting the user response to selected users, and synchronizing the user response with the external data storage.

According to the present invention the first response is displayed on a social networking website without launching the social networking website on the handheld mobile electronic device.

According to an exemplary embodiment, the method of the present disclosure creates an invitational list for the first event and synchronizes the invitational list with the external data storage.

According to an exemplary embodiment, the method of the present disclosure transmits the user response to members on the invitation list.

According to an exemplary embodiment, the method of the present disclosure the user response is a text message, an email, a video, or a file attachment and is transmitted to each member of the invitation list.

According to an exemplary embodiment, the method of the present disclosure creates automatically an event on a social networking website with invited guests from the invitation list without launching the social networking website.

According to an exemplary embodiment, the method of the present disclosure sets a reminder message to be triggered before a predetermined time period of the first event; and triggers the reminder message before the predetermined time period of the first event.

According to an exemplary embodiment, the method of the present disclosure allows dragging and dropping of the electronic calendar on a home screen of the handheld mobile device and displays the electronic calendar as a widget on the home screen.

According to an exemplary embodiment, the method of the present disclosure sends a birthday greeting to a social networking website without launching the website.

According to an exemplary embodiment, the method of the present disclosure synchronizes data with the external data storage from a web based social networking website, from a messenger service, from an email server, or from a calendar server.

According to the present invention, a handheld mobile electronic device is provided as set forth in claim 8. The handheld mobile electronic device at least contains a communication unit, a storage unit, an input unit, a display unit, and a processing unit connected to the communication unit, the storage unit, the input unit, the display unit.

The handheld mobile electronic device configures the communication unit for synchronizing the electronic calendar with an external data storage to generate a first synchronized data, the storage unit for storing the first synchronized data, the input unit for inputting a first response based on the first synchronized data, the processor for transmitting the first response through the communication unit and for synchronizing the first response with the external data storage through the communication unit.

According to the present invention, the handheld mobile electronic device configures the communication unit for transmitting the first response to be displayed on a social networking website without launching the social networking website on the handheld mobile electronic device.

According to an exemplary embodiment, the handheld mobile electronic device of the present disclosure configures the processor for synchronizing through the communication unit an invitational list created for the first event with the external data storage.

According to an exemplary embodiment, the handheld mobile electronic device of the present disclosure configures the communication unit for transmitting the first response to members on the invitation list.

According to an exemplary embodiment, the handheld mobile electronic device of the present disclosure configures transmits the first response which could be a phone call, a text message, an email, a video, or a file attachment.

According to an exemplary embodiment, the handheld mobile electronic device of the present disclosure configures the communication unit for transmitting the first event and the invitational list to be generated as a social event with a invited guest list on a social networking website without launching the social networking website.

According to an exemplary embodiment, the handheld mobile electronic device of the present disclosure configures the processor for setting a reminder message to be triggered before a predetermined time period of the first event, and triggering the reminder message before the predetermined time period of the first event.

According to an exemplary embodiment, the handheld mobile electronic device of the present disclosure configures a display unit for displaying the electronic calendar as a widget on the home screen when the electronic calendar is dragged and dropped on the home screen of the handheld electronic mobile device.

According to an exemplary embodiment, the handheld mobile electronic device of the present disclosure configures the processor to send through the communication unit a birthday greeting to be displayed on a social networking website without launching the website.

According to an exemplary embodiment, the handheld mobile electronic device of the present disclosure configures the communication unit to synchronize data from a web based social networking website, from a messenger service, from an email server, or from a calendar server.

The accompanying drawings are included to provide a further understanding of the disclosure and are incorporated in and constitute a part of this specification. The drawings illustrate embodiments of the present invention and, together with the description, serve to explain the principles of the invention.

### BRIEF DESCRIPTION OF THE DRAWINGS

FIG. 1 illustrates the agenda view of the calendar application or widget.
FIG. 2 illustrates the agenda view of the calendar application or widget dropped onto a home screen.
FIG. 3 illustrates an event details view of the calendar application or widget.
FIG. 4 illustrates an editing interface for sending a birthday greeting.
FIG. 5 illustrates a menu for sending a greeting message.
FIG. 6 illustrates the flow chart of sending a birthday greeting to a friend on a social networking website.
FIG. 7A illustrates the agenda view of a list of events integrating an online calendar function.
FIG 7B illustrates the holiday details view of an event integrated into an online calendar function.
FIG. 7C illustrates a dialog interface for editing an event and for inviting friends by from Google calendar.
FIG. 7D illustrates a dialog interface for editing an event and for inviting friends by from an email program.
FIG. 8 is a flow chart illustrating an example of integrating Google calendar or Exchange into the calendar application/widget and create an invitation of an event corresponding to the calendar data from Google calendar.
FIG 9 illustrates a mobile device electronic device for executing a calendar function according to an exemplary embodiment of the present invention.

### DETAILED DESCRIPTION OF DISCLOSED EMBODIMENTS

Reference will now be made in detail to the present embodiments of the invention, examples of which are illustrated in the accompanying drawings. Wherever possible, the same reference numbers are used in the drawings and the description to refer to the same or like parts.

The present disclosure provides a method of a calendar application/widget interaction among users and with online services while showing a reminder triggered by the information obtained from the online services.

According to an exemplary embodiment of the present invention, when the calendar application for mobile phone synchronizes with various social networks such as MySpace or Facebook, personal information such as people's profiles, photographs, daily agenda, or events entered into the social networks may be obtained. When the calendar application receives a birthday reminder triggered by the calendar application in accordance with the profile data obtained from the social networks, the user may post a birthday greeting on a webpage of the social networks without having to additionally launch the social network applications.

Each time when a user logs into a social network, all time and dates related information from the social network, for instance, birthday dates, anniversaries, or any special dates of friends in the social network, or data of calendar events of the social network will be downloaded from the cloud storage into a storage of the mobile phone. The time, date, and information of each event which might be useful for the calendar application is downloaded and is then integrated into the database of the calendar application/widget so that a brief description about each time, date, and information related to each calendar event from the online service may be displayed on an agenda view of the calendar application or widget. However, the user may also view the time, date, and related information of each event obtained from the online service in the month view or day view.

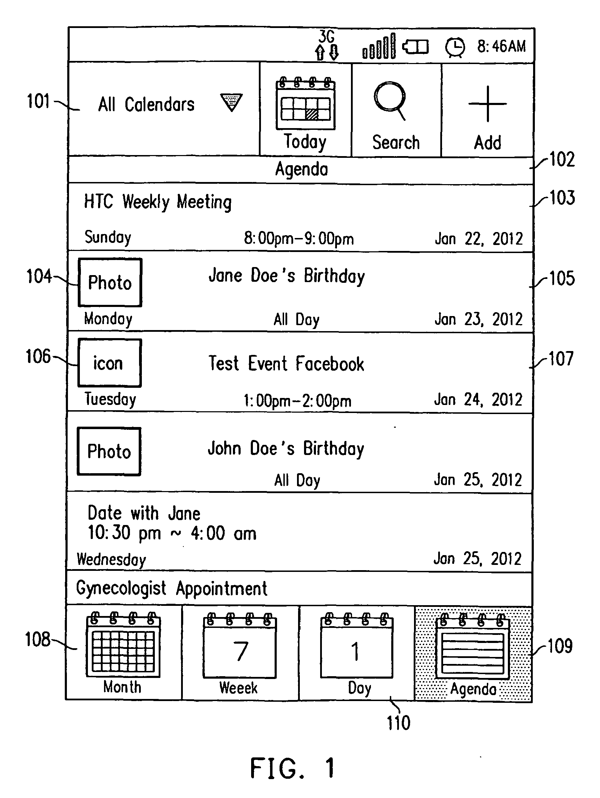

Figure 1 illustrates the agenda view of a calendar application or widget in accordance with an exemplary embodiment of the present invention. From the agenda view, the date, time, and related information of various events may be shown. These events may be events entered manually by a user or events synchronized from another source. A user may touch on the menu named All Calendars 101 to select what targets the calendar application or widget of this mobile phone may want to synchronize with. For instance, the mobile phone may synchronize with calendar applications of a PC, an email server such as Gmail, a web based social networks such as Facebook or MySpace, or a messenger service.

Under the agenda list 102, it may shown a list of events. For each event, it may include a photograph 104 or a representative icon 106 for the event. Also an event may have the name of the event, the time and date of the event, and a description for the event. For instance, the agenda list 102 may show a weekly recurring event such as a weekly meeting 103. It may show a birthday event 105 including a person's photograph 104 downloaded from a social network or entered manually. It may include a downloaded event from a social network 107 represented by an icon 106. A user may touch on any one of these listed event to obtain a more detailed view of each event.

Besides the agenda view, a user may also switch among other views (not shown) by touching on menus on the bottom of the menu including the monthly view 108, weekly view, daily view 110, and the agenda view 109. The month view may show various events, including synchronized events, annotated on a calendar of the mobile phone. The daily view works like a daily planner and may list all the events of the times of a day. The agenda view 109 as previous mentioned, is a compiled list of all the events manually entered or downloaded and ascending sorted according to time.

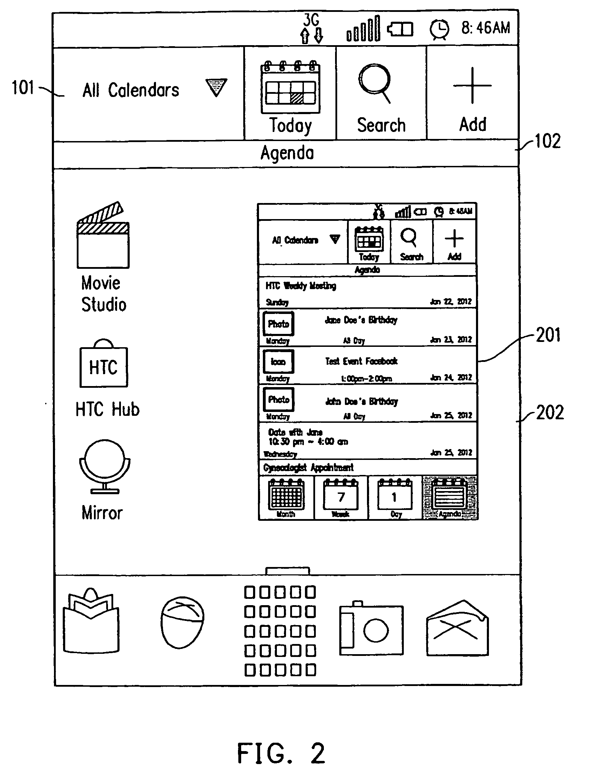

Fig. 2 illustrates the agenda view of the calendar widget 201 dropped onto the home screen 202. The agenda view of the calendar application according to Figure 1 may be selected and dropped onto a home screen of the mobile device and become a calendar widget 201 on the home screen 202. With the calendar widget 201 on the home screen 202, a user may quickly recognize an upcoming birthday or a schedule event with the date and time and all the related information of the event through the agenda view of the calendar widget as shown in Figure 2.

For each event of the calendar application or widget, the reminder time of each event may be set by a user. The user may decide what predetermined time period before the time of the event would trigger the reminder. To set the reminder time, a user may tap an item on the agenda list 102 to see the details thereof. Alternatively, when the reminder of the item is displayed to the user, the details thereof is showing on the reminder.

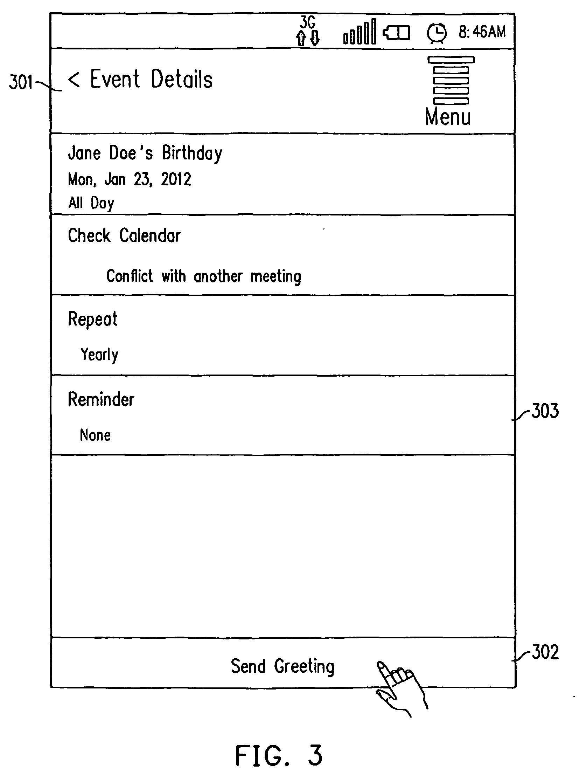

The reminder time may be set by a user from the event details view. Figure 3 illustrates the event details view 301 according to an exemplary embodiment of the present disclosure. If a user touches the item Jane Doe's Birthday 105 from the agenda view in Figure 1, it brings the users to the event detail view 301 of the birthday event 105. The event detail view 301 contains a list of menus. An user may touch the reminder menu 303 to set the reminder for this particular event. For example, a person may set the reminder to one week, one day, or one hour, and the reminder in this case may trigger every year to remind a user this particular event since the reminder in Figure 3 is set to repeat yearly.

A person may also send a birthday greeting from the event details view 301 by touching Send Greeting 302 software button on the event details view. When the Send Greeting 302 button is touched, a dialog menu may be launched.

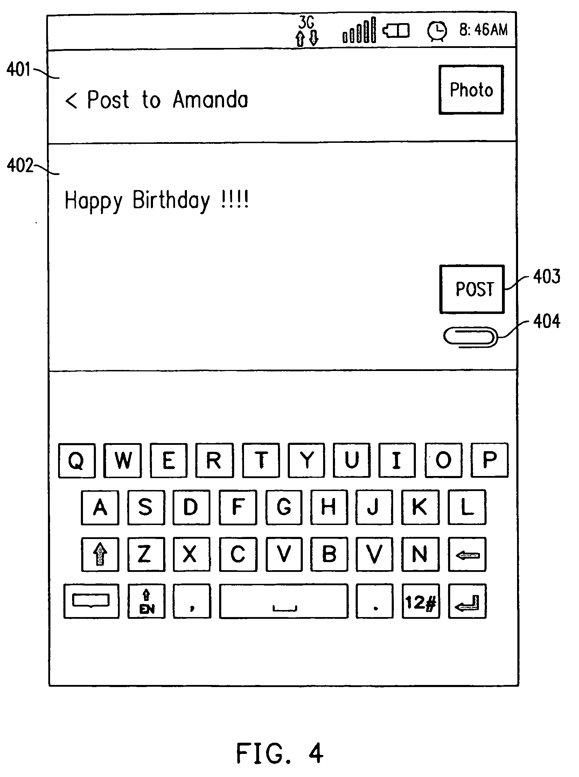

Figure 4 illustrates the dialog menu according to an exemplary embodiment of the present disclosure. The dialog menu has a software keyboard on a part of the screen to enter a message for a recipient or to edit a default message. As shown in Figure 3, a contact's name 401 is identified on the dialog menu with a profile photograph obtained from an online service to be displayed as an identification. There is a text area 402 for a user to enter or edit the greetings message. A user may attach a file by using the clip button 404. Alternatively, a default message / image / icon / video / hyper link may be displayed in the dialogue for a user to edit or to send the content directly.

When a user is finished with the editing and the file attachment, POST 403 may be tapped to send the greeting message onto the friend's webpage provided by the online service. For example, if the birthday information is acquired from Facebook, the greeting content will be directly posted on the friend's Wall after the user tap on the "POST" button.

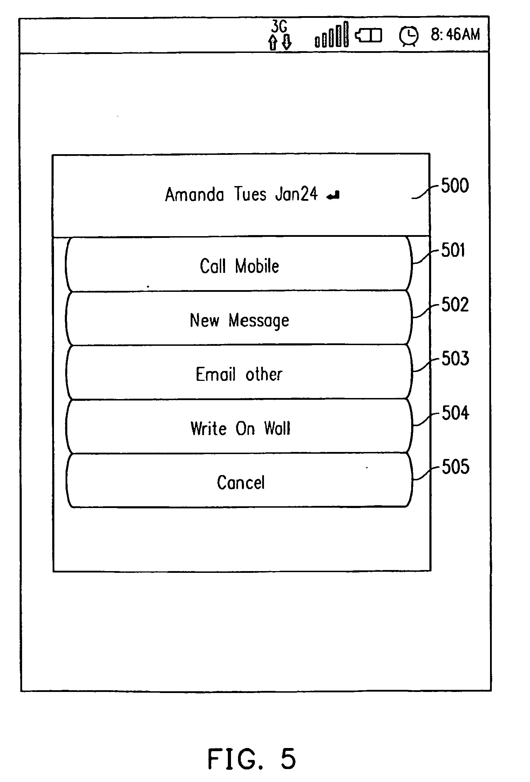

In another exemplary embodiment, after a user taps on the Send Greeting 302 software button as shown in Figure 3, there may be a pop up menu for displaying various options of sending a greeting. Figure 5 illustrates a pop up menu 500 for sending a greeting in accordance with the exemplary embodiment. The pop up menu 500 shows a person's name and date on the top of the menu. If a user taps on the "Call mobile" option 501, the "New message" option 502, or the "Email other" option 503, the related application such as the Phone call application, the SMS application and the Email application will be launched for the user to make a phone call, to create a SMS message, or to write an e-mail. Similarly, a dialog for editing a greetings message as shown in Fig. 4 may be displayed if the user taps on the "Write on wall" option 504. Then after the user selects the "POST" button, the greeting content will be directly posted on the friend's Wall without launching the Facebook application. However, if the user does not want to send any greeting, he/she may tap on the "Cancel" option 505 to return to the Agenda view of the calendar application or widget.

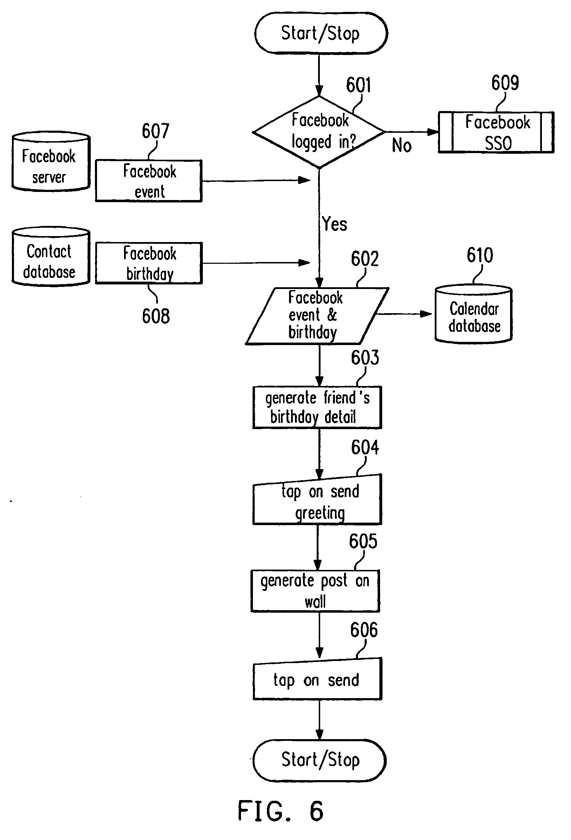

Figure 6 illustrates a flow chart for sending a birthday greeting to a friend on Facebook while the birthday information and the event information are acquired from Facebook and integrated into the calendar application or widget. In step 601, the mobile phone determines whether a user is logged into Facebook. If a user is not logged into Facebook, in step 609 the user may first need to log into Facebook. If a user is logged into Facebook, in step 607, Facebook events from Facebook server are synchronized with the mobile phone so that Facebook events are integrated into the calendar application or widget of the mobile phone. Also in step 608, the contact database is also synchronized with the mobile phone so that birthdays of contacts from Facebook may be downloaded from the Contact database of Facebook. In step 602, after Facebook events and birthdays are synchronized from the server and database of Facebook, these information are stored in the calendar database of the mobile phone in step 610.

In step 603, after knowing that a friend's birthday has arrived from Facebook or is imminent from the reminder function of the mobile phone as the friend's birthday detail has been generated by the calendar function in step 603, a user may send a birthday greeting message using the dialog menu as shown in Figure 4. When the greeting message has been sent, in step 605 it gets posted directly on Facebook without having to launch the Facebook application. Alternatively in step 604, a person may also send the greetings through the pop up menu as illustrated in Figure 5. In step 606, a person may also tap on the clip icon 404 of Figure 4 to send additional text messages, emails, photographs, videos, or files.

The calendar application or widget integrates information from the online services and provides the instant interaction with the online service for the user while displaying a reminder related to the information from the online services. The interaction may be posting the user edited content on the webpage of the contact's event on the online services. It should be noted that the information obtained from the online service is not limited by the birthday of friends or the event date, and the online service comprises any social networking service.

The followings is an example of integrating an online calendar into the Calendar application/widget in accordance with an exemplary embodiment of the present disclosure, and providing a user interaction based on the online calendar information. To be specific, the online calendar service provides several kinds of online calendar covering distinct holidays based on different cultures for a user to select. After the user login the user account, he/she may select one of the online calendar and add their personal schedule and the memorial day into the online calendar to create a personal online calendar. Each time when a user logs into the account of an online calendar service on the mobile phone, the online calendar data will be downloaded from the cloud storage into the mobile phone, and integrated into the database of the Calendar application/widget. That is, the brief description of each downloaded online calendar data (e.g., friends' birthday, the holiday or the event date) may be displayed on the Agenda view (or the month view or the day view) of the Calendar application & Widget

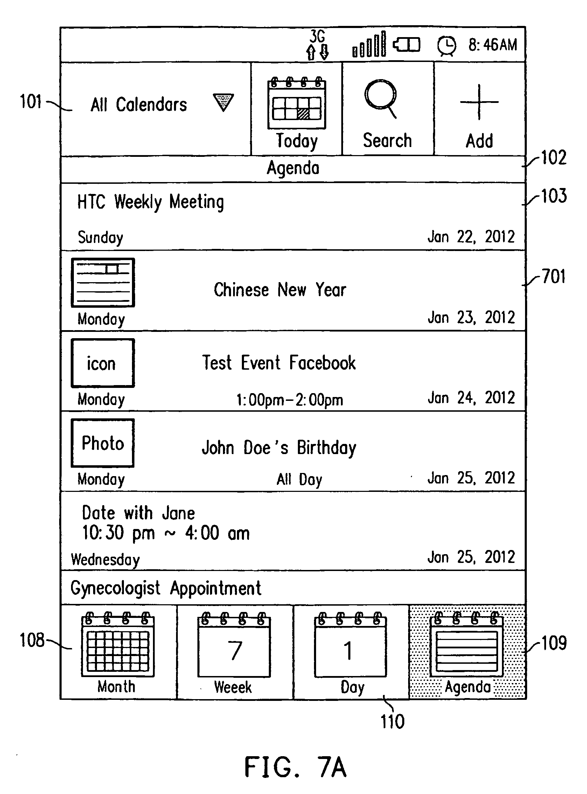

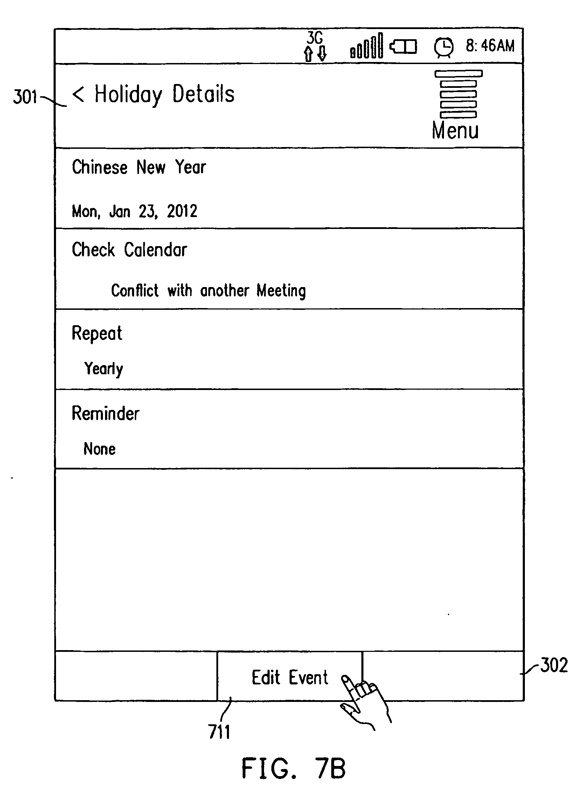

Figure 7A-7D illustrate a user interaction with the calendar application or widget based on the online calendar function. Figure 7A illustrates the agenda view of a list of events integrating an online calendar function. The detail description of each downloaded online calendar data is generated when online calendar is synchronized with a mobile phone. If a user taps on the an item on the Agenda view or its corresponding reminder when the online calendar data is displayed, the detail descriptions may be generated and displayed as shown in Figure 7A. The item 701 shows an event downloaded from an online calendar. The event for this example is the Chinese New Year event schedule for January of 2012. If a user touches the item of the event 701, the user is taken to the Holiday details view illustrates in Figure 7B. The Holiday details view of Figure 7B is similar to the event details view of Figure 3, but one difference is the Edit Event button 711.

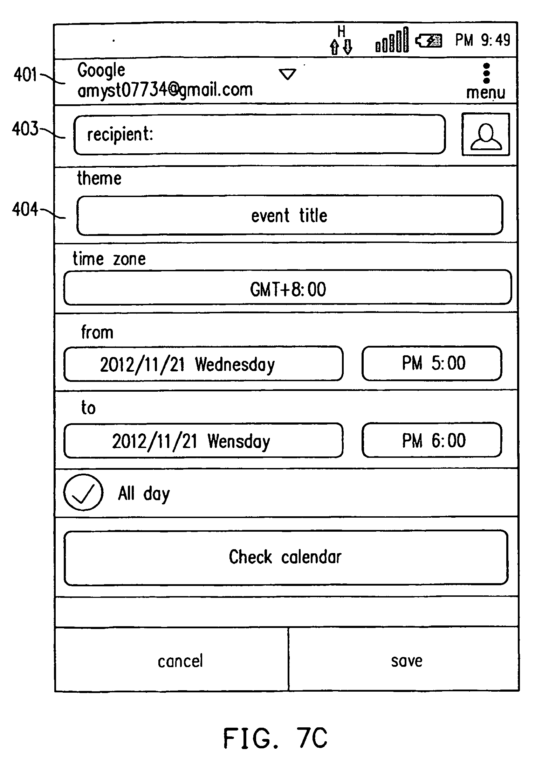

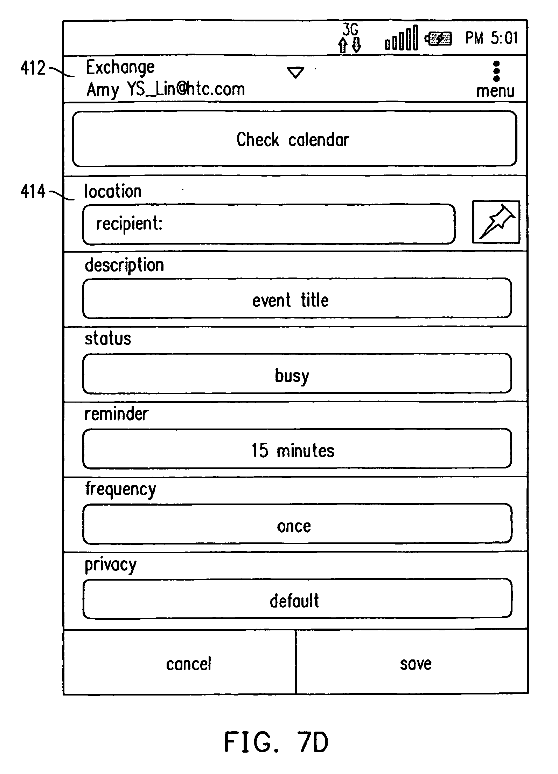

When the user taps on the "Edit Event" button, a dialog interface will be displayed for the user to create an event and invite friends to join the event. Figure 7C illustrates the dialog interface for editing an event and for inviting friends from Google. When the user logs into Google through one's email 401, the user can identify one or more recipient 403 or invitee or add a title 404 through a dialogue interface. As shown in Figure 7C, the user may edit the event message and add at least one event invitee through the dialog interface. When a user taps on the "save" button, the event information will be sent to the online calendar service to share the event with friends through the user's online calendar, and the invitation will be sent to all invitees. The same concept applies for an email service such as Exchange. Referring to Figure 7D, when a user logs into an email program such as Exchange 412 one one's own electronic device, the user may identify at least one recipient 414 and edit event information to send event invitations to all recipients identified in the dialogue interface.

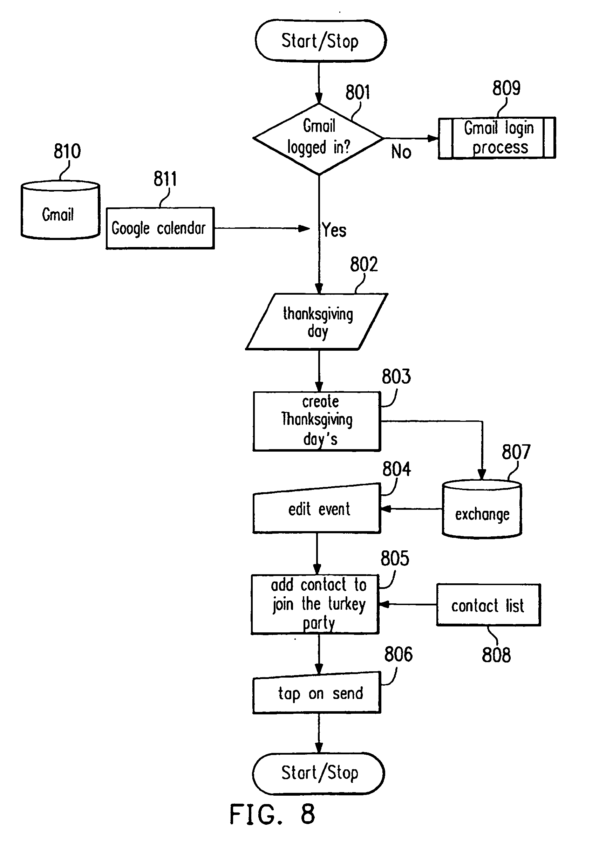

Figure 8 is a flow chart illustrating an example of integrating Google calendar into the calendar application/widget and create an invitation of an event corresponding to the calendar data from Google calendar. In step 801, the mobile phone determines whether a user is logged into the Gmail service. If no, then in step 809, the user may be required to log into Gmail. If yes, the Google calendar 811 from the Gmail server 810 is synchronized with an email database on the mobile phone such as Exchange. In step 802, a user extracts a Thanksgiving day event from the Google calendar 811. In step 803, the Thanksgiving day event is generated in the calendar application / widget and may be available to be selected through the agenda view or through other views and subsequently in step 807 the event in saved into the calendar database of the mobile device. In step 804, a user may edit an event, or particularly the Thanksgiving event stored in Exchange 807, by tapping on the edit button in the holiday details view of Figure 7B to bring up a dialogue interface. From the dialogue interface in step 805, a user may find friends from a contact list 808 of an email database to execute step 806 which is to send invitations to friends to join the Thanksgiving party by tapping on the send button of the dialogue interface.

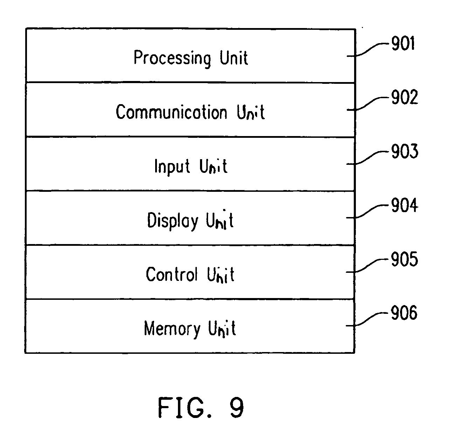

Figure 9 illustrates a mobile device electronic device for executing a calendar function according to an exemplary embodiment of the present disclosure. The mobile electronic device may contain electrical circuits including but not limiting to a processing unit 901, a communication unit 902, an input unit 903, a display unit 904, a control unit 905, and a memory unit 906. The processing unit 901 and the control unit 905 are connected to the communication unit 902, the input unit 903, the display unit 904, the control unit 905, and the memory unit 906.

The display unit 904 may be a touch screen equipped with sensors for receiving touch signals. The input unit 903 may receive and process various input signals from a user. For instance, the input unit may receive a touch input signal from the touch screen and determine a precise location of the touch signal. The control unit 905 coordinates various control signals within the electronic device. The communication unit 902 may include transceivers, filters, mixers, an analog to digital converter, a digital to analog converter, low noise amplifiers, gain stages, power amplifiers, GPS devices, and signal processing units. The communication unit 902 may synchronize through internet or communication protocols with the cloud storage from social networks, messengers, email servers, or calendar servers.

The non-transitory memory unit 906 contains program instructions including instructions for executing the calendar functions and contain user data including data stored by the calendar application or widget. The processing unit 901 may execute functions related to the calendar application or widget through the control unit 905, the communication unit 902, the input unit, the display unit 904, the control unit 905, and the memory unit 906.

In view of the aforementioned descriptions, the present disclosure provides a calendar application or widget for use on a handheld electronic mobile device which is able to synchronize with external data storages from the cloud storage to obtain data including birthdays, social events, holidays, anniversaries, and user defined events. Upon synchronizing the data, a user is able to send birthday greetings to be posted on a webpage of a social network without launching the social network website. The user is also able to synchronize events with a calendar server including social or holiday events, send invitations to selected contact list, edit the event, and synchronize the edited event with the calendar server.

It will be apparent to those skilled in the art that various modifications and variations can be made to the structure of the disclosed embodiments without departing from the scope of the present invention as defined by the scope of the following claims.

## Claims

1. A method of using an electronic calendar (201) in a handheld mobile electronic device without launching a social networking service, the method comprising the steps of:
synchronizing the electronic calendar (201) with an external data storage of the social networking service thereby generating first synchronized data;
generating automatically a first event (602, 603) according to the first synchronized data;
entering a first response (604, 605) based on the first event;
transmitting the first response to the external data storage (606);
synchronizing the first response with the external data storage; and
displaying the first response on the social networking service.

2. The method of claim 1, further comprising the steps of:
creating an invitational list for the first event;
synchronizing the invitational list with the external data storage; and
transmitting the first response to members on the invitation list.

3. The method of claim 2, wherein the step of transmitting the first response to members on the invitation list comprises:
transmitting a text message, an email, a video, or a file attachment to each member of the invitation list.

4. The method of claim 2, further comprising the steps of:
synchronizing automatically the first event on a website of the social networking service with invited guests from the invitation list without launching the website.

5. The method of claim 1, further comprising the steps of:
setting a reminder message to be triggered before a predetermined time period of the first event; and
triggering the reminder message before the predetermined time period of the first event.

6. The method of claim 1, further comprising the steps of:
selecting and dropping the electronic calendar on a home screen of the handheld mobile device; and
displaying the electronic calendar as a widget on the home screen.

7. The method of claim 1, wherein the first synchronized data with the external data storage comprises data from a web based social networking website, from a messenger service, from an email server, or from a calendar server.

8. A handheld mobile electronic device, comprising:
a communication unit (902) for synchronizing an electronic calendar (201) of the handheld mobile electronic device with an external data storage of a social networking service, thereby generating first synchronized data;
a storage unit (906) for storing the first synchronized data;
an input unit (903) for inputting a first response based on the first synchronized data;
a processor (901) connected to the communication unit (902), to the storage unit (906), and to the input unit (903) and configured for automatically generating a first event based on the first synchronized data, for transmitting the first response through the communication unit to the external data storage, and for synchronizing the first response with the external data storage through the communication unit without launching the social networking service;
wherein the communication unit is further configured for transmitting the first response to be displayed on the social networking service.

9. The handheld mobile electronic device of claim 8, wherein the processor is further configured for synchronizing through the communication unit an invitational list created for the first event with the external data storage.

10. The handheld mobile electronic device of claim 9, wherein the communication unit is further configured for transmitting the first response to members on the invitation list.

11. The handheld mobile electronic device of claim 8, wherein the communication unit is further configured for transmitting the first event and the invitational list, thereby generating a social event with a invited guest list on a webste of the social networking service without launching the website.

12. The handheld mobile electronic device of claim 8, wherein the processor is further configured for setting a reminder message to be triggered before a predetermined time period of the first event, and triggering the reminder message before the predetermined time period of the first event.

13. The handheld mobile electronic device of claim 8 further comprising:
a display unit for displaying the electronic calendar as a widget on the home screen when the electronic calendar is selected and dropped on the home screen of the handheld electronic mobile device.

14. The handheld mobile electronic device of claim 8 wherein the communication unit is further configured for synchronizing with the external data storage from a web based social networking website, from a messenger service, from an email server, or from a calendar server.

## Patentansprüche

1. Ein Verfahren zum Verwenden eines elektronischen Kalenders (201) in einem handgehaltenen mobilen elektronischen Gerät ohne das Starten eines sozialen Netzwerkdienstes, wobei das Verfahren die folgenden Schritte aufweist:
Synchronisieren des elektronischen Kalenders (201) mit einen externen Datenspeicher des sozialen Netzwerkdienstes, wobei dabei erste synchronisierte Daten erzeugt werden;
automatisches Erzeugen eines ersten Ereignisses (602, 603) entsprechend der ersten synchronisierten Daten;
Eingeben einer ersten Antwort (604, 605) basierend auf dem ersten Ereignis;
Senden der ersten Antwort (606) an den externen Datenspeicher;
Synchronisieren der ersten Antwort mit dem externen Datenspeicher; und
Anzeigen der ersten Antwort in dem sozialen Netzwerkdienst.

2. Das Verfahren nach Anspruch 1, wobei das Verfahren ferner folgende Schritte aufweist:
Erzeugen einer Einladungsliste für das erste Ereignis;
Synchronisieren der Einladungsliste mit dem externen Datenspeicher; und
Senden der ersten Antwort an Mitglieder auf der Einladungsliste.

3. Das Verfahren nach Anspruch 2, wobei der Schritt des Sendens der ersten Antwort an Mitglieder auf der Einladungsliste ferner folgenden Schritt aufweist:
Senden einer Textnachricht, einer Email, eines Videos oder eines Dateianhangs an jedes Mitglied auf der Einladungsliste.

4. Das Verfahren nach Anspruch 2, wobei das Verfahren ferner folgenden Schritt aufweist:
automatisches Synchronisieren des ersten Ereignisses auf einer Website des sozialen Netzwerkdienstes mit eingeladenen Gästen von der Einladungsliste ohne die Website zu starten.

5. Das Verfahren nach Anspruch 1, wobei das Verfahren ferner folgende Schritte aufweist:
Setzen einer Erinnerungsnachricht, die vor einer vorbestimmten Zeitspanne des ersten Ereignisses ausgelöst werden soll; und
Auslösen der Erinnerungsnachricht vor der vorbestimmten Zeitspanne des ersten Ereignisses.

6. Das Verfahren nach Anspruch 1, wobei das Verfahren ferner folgende Schritte aufweist:
Auswählen und Verlagern des elektronischen Kalenders auf einem Homebildschirm des handgehaltenen Mobilgerätes; und
Darstellen des elektronischen Kalenders als ein Widget auf dem Homebildschirm.

7. Das Verfahren nach Anspruch 1, wobei die ersten synchronisierten Daten mit dem externen Datenspeicher Daten von einer Web basierten sozialen Netzwerkwebsite, von einem Nachrichtendienst, von einem Emailserver oder von einem Kalenderserver aufweisen.

8. Ein handgehaltenes mobiles elektronisches Gerät, wobei das Gerät Folgendes aufweist:
eine Kommunikationseinheit (902) zum Synchronisieren eines elektronischen Kalenders (201) des handgehaltenen mobilen elektronischen Gerätes mit einem externen Datenspeicher eines sozialen Netzwerkdienstes, wobei dabei erste synchronisierte Daten erzeugt werden;
eine Speichereinheit (906) zum Speichern der ersten synchronisierten Daten;
eine Eingabeeinheit (903) zum Eingeben einer ersten Antwort basierend auf den ersten synchronisierten Daten;
einen Prozessor (901), der mit der Kommunikationseinheit (902), der Speichereinheit (906) und mit der Eingabeeinheit (903) verbunden ist und konfiguriert ist zum automatischen Erzeugen eines ersten Ereignisses basierend auf den ersten synchronisierten Daten, zum Senden der ersten Antwort durch die Kommunikationseinheit an den externen Datenspeicher, und zum Synchronisieren der ersten Antwort mit dem externen Datenspeicher durch die Kommunikationseinheit ohne den sozialen Netzwerkdienst zu starten;
wobei die Kommunikationseinheit ferner konfiguriert ist zum Senden der ersten Antwort um diese in dem sozialen Netzwerkdienst anzuzeigen.

9. Das handgehaltene mobile elektronische Gerät nach Anspruch 8, wobei der Prozessor ferner konfiguriert ist zum Synchronisieren, durch die Kommunikationseinheit, einer Einladungsliste, die für das erste Ereignis erzeugt wurde, mit dem externen Datenspeicher.

10. Das handgehaltene mobile elektronische Gerät nach Anspruch 9, wobei die Kommunikationseinheit ferner konfiguriert ist zum Senden der ersten Antwort an Mitglieder auf der Einladungsliste.

11. Das handgehaltene mobile elektronische Gerät nach Anspruch 8, wobei die Kommunikationseinheit ferner konfiguriert ist zum Senden des ersten Ereignisses und der Einladungsliste, wobei dabei ein soziales Ereignis mit einer Einladungsgästeliste auf einer Website des sozialen Netzwerkdienstes erzeugt wird, ohne dass die Website gestartet wird.

12. Das handgehaltene mobile elektronische Gerät nach Anspruch 8, wobei der Prozessor ferner konfiguriert ist zum Setzen einer Erinnerungsnachricht, die vor einer vorbestimmten Zeitspanne des ersten Ereignisses ausgelöst werden soll und zum Auslösen der Erinnerungsnachricht vor der vorbestimmten Zeitspanne des ersten Ereignisses.

13. Das handgehaltene mobile elektronische Gerät nach Anspruch 8, wobei das Gerät ferner Folgendes aufweist:
eine Darstellungseinheit zum Darstellen des elektronischen Kalenders als ein Widget auf dem Homebildschirm, wenn der elektronische Kalender ausgewählt und auf den Homebildschirm des handgehaltenen elektronischen Mobilgerätes verlagert wird.

14. Das handgehaltene mobile elektronische Gerät nach Anspruch 8, wobei die Kommunikationseinheit ferner konfiguriert ist zum Synchronisieren mit dem externen Datenspeicher von einer Web basierten sozialen Netzwerkwebsite, von einem Nachrichtendienst, von einem Emailserver oder von einem Kalenderserver.

## Revendications

1. Procédé d'utilisation d'un calendrier électronique (201) dans un dispositif mobile portable sans lancement d'un service de réseau social, le procédé comprenant les étapes suivantes :
synchroniser le calendrier électronique (201) avec un élément de stockage de données externe du service de réseau social, générant ainsi des premières données synchronisées ;
générer automatiquement un premier événement (602, 603) conformément aux premières données synchronisées ;
introduire une première réponse (604, 605) sur la base du premier événement ;
transmettre la première réponse (606) à l'élément de stockage de données externe ;
synchroniser la première réponse avec l'élément de stockage de données externe ; et
afficher la première réponse sur le service de réseau social.

2. Procédé selon la revendication 1, comprenant en outre les étapes suivantes :
créer une liste d'invitations pour le premier événement ;
synchroniser la liste d'invitations avec l'élément de stockage de données externe ; et
transmettre la première réponse aux membres se trouvant sur la liste d'invitation.

3. Procédé selon la revendication 2, dans lequel l'étape de transmission de la première réponse à des membres se trouvant sur la liste d'invitation comprend :
transmettre un message de texte, un courriel, une vidéo, ou un fichier attaché à chaque membre de la liste d'invitations.

4. Procédé selon la revendication 2, comprenant en outre les étapes suivantes :
synchroniser automatiquement le premier événement sur un site Web du service de réseau social avec des invités pris parmi la liste d'invitations sans lancer le site de Web.

5. Procédé selon la revendication 1, comprenant en outre les étapes suivantes :
régler un message de rappel pour qu'il soit déclenché avant une période de temps prédéterminée du premier événement ; et
déclencher le message de rappel avant la période de temps prédéterminée du premier événement.

6. Procédé selon la revendication 1, comprenant en outre les étapes suivantes :
sélectionner et déposer le calendrier électronique sur un écran d'accueil du dispositif mobile portable ; et
afficher le calendrier électronique sous forme d'un widget sur l'écran d'accueil.

7. Procédé selon la revendication 1, dans lequel les premières données synchronisées avec l'élément de stockage de données externe comprennent des données provenant d'un site Web de réseau social sur le Web, d'un service de messagerie, d'un serveur de courrier électronique, ou d'un serveur de calendrier.

8. Dispositif électronique mobile portable, comprenant :
un module de communication (902) pour synchroniser un calendrier électronique (201) du dispositif électronique mobile portable avec un élément de stockage de données externe d'un service de réseau social, générant ainsi des premières données synchronisées ;
un module de stockage (906) pour mémoriser les premières données synchronisées ;
un module d'entrée (903) pour introduire une première réponse sur la base des premières données synchronisées ;
un processeur (901) connecté au module de communication (902), au module de stockage (906), et au module d'entrée (903) et agencé pour générer automatiquement un premier événement sur la base des premières données synchronisées, pour transmettre la première réponse par l'intermédiaire du module de communication au module de stockage de données externe, et pour synchroniser la première réponse avec l'élément de stockage de données externe par l'intermédiaire du module de communication sans lancer le service de réseau social ;
dans lequel le module de communication est en outre agencé pour transmettre la première réponse à afficher sur le service de réseau social.

9. Dispositif électronique mobile portable selon la revendication 8, dans lequel le processeur est en outre agencé pour synchroniser par l'intermédiaire du module de communication une liste d'invitations créée pour le premier événement avec l'élément de stockage de données externe.

10. Dispositif électronique mobile portable selon la revendication 9, dans lequel le module de communication est en outre agencé pour retransmettre la première réponse aux membres se trouvant sur la liste d'invitation.

11. Dispositif électronique mobile portable selon la revendication 8, dans lequel le module de communication est en outre agencé pour transmettre le premier événement et la liste d'invitation, générant ainsi un événement social avec une liste d'invités sur un site Web du service de réseau social sans lancer le site Web.

12. Dispositif électronique mobile portable selon la revendication 8, dans lequel le processeur est en outre agencé pour régler un message de rappel pour se déclencher avant une période de temps prédéterminée du premier événement, et déclencher le message de rappel avant la période de temps prédéterminée du premier événement.

13. Dispositif électronique mobile portable selon la revendication 8, comprenant en outre :
un module d'affichage pour afficher le calendrier électronique sous forme d'un widget sur l'écran d'accueil lorsque le calendrier électronique est sélectionné et déposé sur l'écran d'accueil du dispositif mobile électronique portable.

14. Dispositif électronique mobile portable selon la revendication 8, dans lequel le module de communication est en outre agencé pour se synchroniser avec l'élément de stockage de données externe à partir d'un site Web de réseau social sur le Web, à partir d'un service de messagerie, à partir d'un serveur de courrier électronique, ou à partir d'un serveur de calendrier.
